# EUROPEAN PATENT SPECIFICATION

(11) **EP 1 476 007 B1**
(45) Date of publication and mention of the grant of the patent: **08.12.2010**
(21) Application number: 03742555.0
(22) Date of filing: 19.02.2003
(51) Int. Cl.: A01D 34/00, A01D 34/81

(54) **ECOLOGICAL LAWNMOWER**
UMWELTSCHONENDER RASENMÄHER
TONDEUSE A GAZON ECOLOGIQUE

(30) Priority: 21.02.2002 IT MI20020084 U
(43) Date of publication of application: 17.11.2004
(73) Proprietor: MA.RI.NA Systems S.r.l., 24034 Cisano Bergamasco (IT)
(72) Inventor: RIVOLTA, Pierluigi, I-23883 Brivio (IT)
(74) Representative: Riccardi, Sergio
(86) International application number: PCT/EP2003/001691
(87) International publication number: WO 2003/069974

(56) References cited:
- DE-A- 2 523 350
- DE-A- 4 201 045
- DE-A- 10 048 866
- FR-A- 2 656 766
- GB-A- 592 692
- US-A- 4 870 811
- US-A- 5 064 315

## Description

The present invention is about an ecological lawnmower, which has remarkably practical and useful features.

At the present time, all existing lawnmowers are equipped with a frame made of iron plate or a plastic material such as polypropylene, polyethylene, ABS resin. Iron machines must be painted, they get rusty, and are not so acids resistant and are also difficult to clean.

The machines made of plastic materials are not recyclable, they are not very strong and they must be handled with caution in order to avoid hits that would inevitably damage their body.

The present invention solves all these inconveniences by adopting for the first time stainless steel as a material for the making of the lawnmower's frame.

Many and important are the advantages achieved by using a stainless steel frame, because the frame does not get rusty, is recyclable, is ecological thanks to the fact that it doesn't use any paints or any other polluting substances, is resistant to the acids produced by the decomposition of the mowed grass, has a greater strength and is easier to clean.

The use of a stainless steel frame has nonetheless required several innovations. An appropriate drawing die had to be employed, by modifying the design and exterior lines of the frame, rounding them up and making all the edges larger in order to allow the presswork, because the stainless steel is much more difficult to draw than the traditional iron plate used for these machines, and even the welding must be carried out with extreme care due to the difficult workability of steel.

However, as previously said, the great advantage of pure stainless steel is that of being directly workable without requiring paints or other treatments with polluting substances.

Documents in prior art disclosing stainless steel lawnmowers include the following.

US4870811 discloses a lawnmower provided with a rectangular shaped tubular frame (see Col. 4 II 40-43) as carrier means, preferably made of stainless steel. However, it is not clear how this particular shape, featured by right angles, is achievable in manufacturing, while stainless steel requires specific bending and/or pressing techniques in order to avoid high residual stress. Also, there is no reference, in the attached claims, to a particular preferred material or mechanical processing to be used in frame manufacturing. DE4201045 discloses a roller chain cutting gear for lawnmower. In the description, housing lower part as well as the roller chain are said to be manufactured from stainless steel. In DE10048866 , which is a document published subsequent to the priority date of the present patent, a lawnmower is disclosed. The housing may be made of steel (Claim 45). DE2523350 discloses and claims a metallic zinc coating to prevent rust for a lawnmower. GB592692 discloses, but does not claim, a lawnmower possibly made of stainless steel, or other material. US5064315 discloses a grass clipping blower connected to the discharge opening of a grass cutting unit of a lawn mower. It comprises a housing, and a liner extending over peripheral inside walls of the housing, the liner including a lining material formed of an elastic resin, and a core formed of a plastically deformable metal and embedded in the lining material. FR2656766 discloses a new model of grass blower to combine to a lawnmower. The blower is made out of stainless steel and an air jet runs through it.

The characteristics of the ecological lawnmower according to the present invention are clearly described in the annexed drawing sheets, wherein:

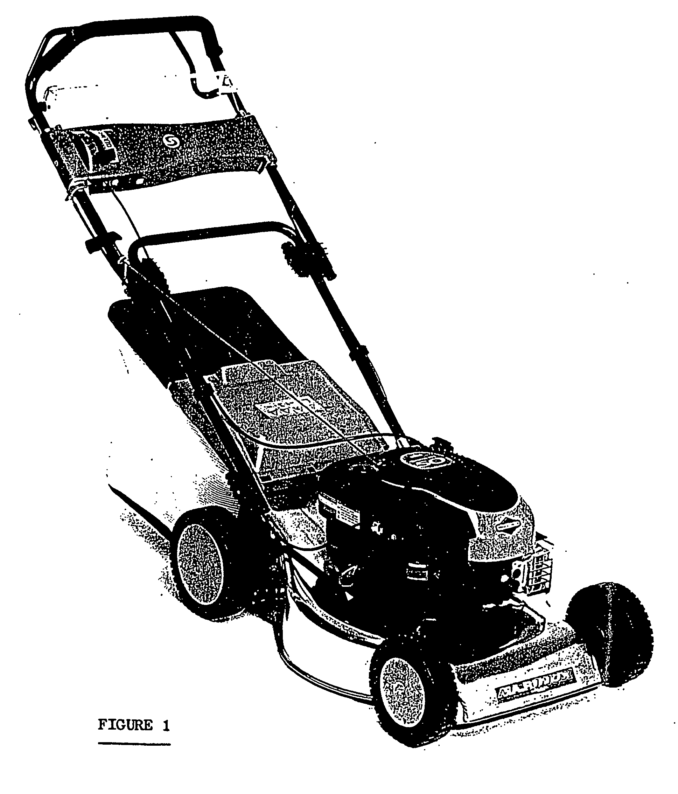

Figure 1 is its front perspective view; and

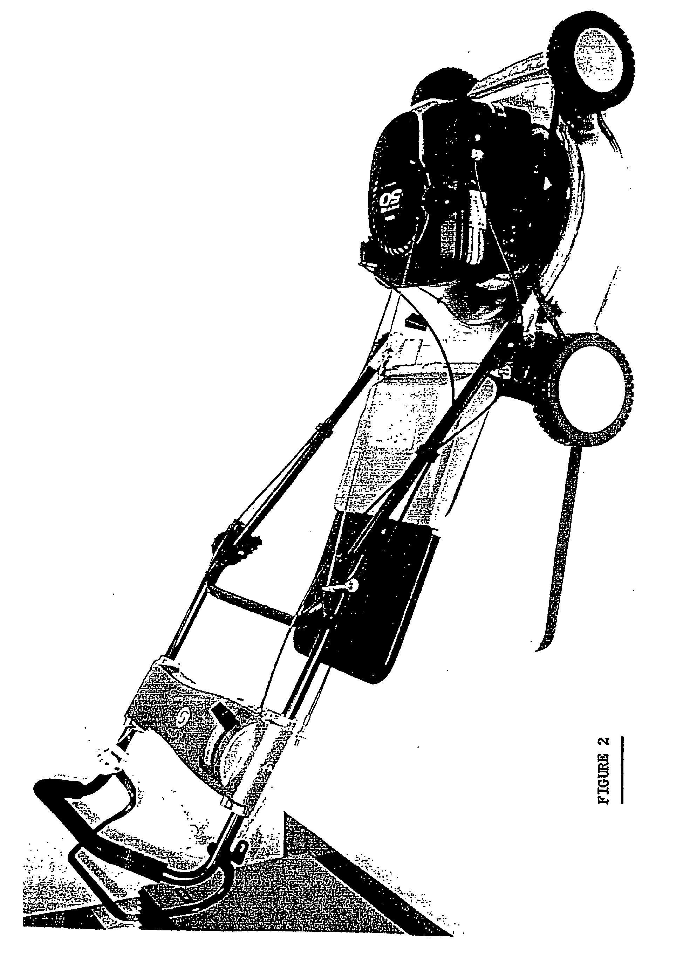

Figure 2 is its side view.

No indication on how to obtain a stainless steel frame for a lawnmower is given in cited prior art.

The rounded outline of the frame without sharp edges, and the rounded, enlarged exterior lines and edges can be noticed from both figures.

It must be also emphasized the fact that the motor is not part of the invention, because the lawnmower can be made both in the self-propelled version and the hand push version.

Among the various types of stainless steel the 18/8 grade is the preferred steel.

From what has been previously said, it is thus understood that the lawnmower according to the invention fully accomplishes the preset objects, but nevertheless several modifications, additions, substitutions and variations of the various elements can be made to the machine, without falling out of its main scope represented by the use of stainless steel as also recited in the following appended claim.

## Claims

1. A lawnmower comprising an unpainted metal frame housing one or more cutting blades, wherein the metal frame is made by drawing stainless steel such that the exterior lines and edges of the frame are rounded.

2. The lawnmower according to claim 1, wherein the stainless steel is 18/8 grade stainless steel.

3. The lawnmower according to claims 1 or 2, wherein the metal frame is formed with an appropriate drawing die with enlarged edges.

## Patentansprüche

1. Rasenmäher bestehend aus einem Metallrohrahmen, der ein bzw. mehrere Schneidblätter aufnimmt, worin der Metallrahmen durch Ziehen von rostfreiem Stahl so hergestellt wird, dass die äusseren Rahmenlinien und -Kanten abgerundet sind.

2. Rasenmäher nach Anspruch 1, worin der rostfreie Stahl aus Grad 18/8 besteht.

3. Rasenmäher nach Anspruch 1 bzw. 2, worin der Metallrahmen mittels einer geeigneten Ziehform mit verbreiteten Kanten hergestellt wird.

## Revendications

1. Tondeuse à gazon comprenant une carcasse métallique brute avec une ou plusieurs lames de coupage, où la carcasse métallique est fabriquée par emboutissage d'acier inoxydable de sorte que les lignes et bords extérieurs de la carcasse sont arrondis.

2. Tondeuse à gazon selon la revendication 1, où l'acier inoxydable est du Type 18/8.

3. Tondeuse à gazon selon les revendications 1 ou 2, où la carcasse métallique est fabriquée par une matrice d'emboutissage appropriée avec des bords élargis.
